# EUROPÄISCHE PATENTSCHRIFT

(11) **EP 2 671 125 B1**
(45) Veröffentlichungstag und Bekanntmachung des Hinweises auf die Patenterteilung: **17.08.2016**
(21) Anmeldenummer: 12703965.9
(22) Anmeldetag: 01.02.2012
(51) Int. Cl.: B65B 31/00, G05D 7/06, B65B 55/10, B65D 83/54

(54) **DOSIEREINHEIT**
METERING UNIT
UNITÉ DE DOSAGE

(30) Priorität: 01.02.2011 DE 202011002208 U
(43) Veröffentlichungstag der Anmeldung: 11.12.2013
(73) Patentinhaber: Bürkert Werke GmbH, 74653 Ingelfingen (DE)
(72) Erfinder: DÖRR, Andreas, 74673 Mulfingen (DE); GILLE, Martin, 74676 Niedernhall (DE); GRAU, Andreas, 64390 Erzhausen (DE); GUNNESCH, Johann, 74638 Waldenburg (DE); KLEINEBERG, Christian, 50259 Pulheim (DE); SCHÄFER, Harald, 74214 Schöntal (DE)
(74) Vertreter: Prinz & Partner mbB
(86) Internationale Anmeldenummer: PCT/EP2012/000445
(87) Internationale Veröffentlichungsnummer: WO 2012/104076

(56) Entgegenhaltungen:
- DE-A1-102007 039 010
- JP-A- 2002 002 626
- US-A1- 2010 018 592

## Beschreibung

Die Erfindung betrifft eine Dosiereinheit zur Abgabe eines Aerosols, das als Flüssigkeitsbestandteil vorzugsweise eine Wasserstoffperoxidlösung enthält.

Derartige Aerosole werden in der Lebensmittelindustrie verwendet, beispielsweise bei Sterilisierungsprozessen von Verpackungen.

Häufig wird in Dosiervorrichtungen zur Abgabe eines Aerosols mit einer definierten Flüssigkeitskonzentration eine Durchflussmessung der Flüssigkeit durchgeführt und die Öffnungszeit eines Schaltventils auf die ermittelten Durchflusswerte abgestimmt. Ein industrielle Dosieranlage ist aus der DE 10 2007 039 010 A1 bekannt. Diese Anlage hat einen Ausgang zur Abgabe eines Aerosols mit definierter Konzentration, mit mindestens einem Eingang für ein Trägergas, mindestens einem Eingang für eine Wasserstoffperoxidlösung und einem Pufferbehälter für die Flüssigkeit, wobei die Dosiereinheit ausströmseitig einen Flüssigkeitsdurchflussregler aufweist.

Wasserstoffperoxidlösungen, welche üblicherweise zu Sterilisierungszwecken mit einer Konzentration von 35% eingesetzt werden, neigen vor allem bei solch hohen Konzentrationen dazu, sich zumindest teilweise in Sauerstoff und Wasser zu zersetzen, so dass neben der flüssigen Phase immer auch ein Gasanteil vorhanden ist.

Dieser Gasanteil kann die Durchflussmessung der Flüssigkeit nachteilig stören, so dass in Folge die Dosierung ungenau und unzuverlässig wird. Gerade in der Lebensmittelindustrie sind aber sehr genaue Dosiervorgänge notwendig, weil auf jeden Fall verhindert werden soll, dass entweder im Fall einer Überdosierung Lebensmittel mit Chemikalien wie Desinfektionsmitteln kontaminiert werden oder im Fall einer Unterdosierung Verpackungen nicht steril und in Folge Lebensmittel verkeimt sind.

Daher ist es Aufgabe der Erfindung, eine Dosiereinheit bereitzustellen, die diese Nachteile nicht aufweist und mit der ein sehr exaktes Dosieren eines Aerosols möglich ist.

Die Erfindung stellt eine Dosierenheit mit den Merkmalen gemäß Anspruch 1 zur Verfügung.

Die erfindungsgemäße Dosiereinheit weist mindestens einen Ausgang zur Abgabe eines Aerosols mit definierter Konzentration auf, mindestens einen Eingang für ein Trägergas, mindestens einen Eingang für eine Flüssigkeit, vorzugsweise eine Wasserstoffperoxidlösung, einen Pufferbehälter für die Flüssigkeit sowie ausströmseitig mindestens einen Flüssigkeitsdurchflussregler. Erfindungsgemäß sind alle fluidischen Verbindungen verrohrungsfrei ausgeführt, das heißt, es sind keine Rohre oder Schläuche als Fluidverbindung zwischen den Einzelkomponenten vorhanden. Flüssigkeitsdurchflussregler haben den Vorteil, dass sie in einem Gerät eine Durchflussmesseinrichtung und ein Proportionalventil umfassen, das heißt, dass das benötigte Ventil direkt im Flüssigkeitsdurchflussregler integriert ist und deshalb separate Leitungen mit Rohren oder Schläuchen zwischen der Durchflussmesseinrichtung und dem Ventil entfallen. Es sind unterschiedliche, geeignete Durchflussmesseinrichtungen als Komponenten eines Flüssigkeitsdurchflussreglers bekannt, die auf verschiedenen Messprinzipien, wie Ultraschall, Kalorimetrisch, Coriolis, Magnetisch-Induktiv (MID), Schwebekörper oder Differenzdruck beruhen und die bei der Erfindung eingesetzt werden können. Außerdem ist es günstig, dass im Flüssigkeitsdurchflussregler ein Proportionalventil integriert ist. Bei Proportionalventilen ist der Öffnungsgrad des Ventils steuer- oder sogar regelbar, was sehr feinfühlige Einstellungen ermöglicht. Dadurch wird die Steuer- bzw. Regel- und die Dosiergenauigkeit wesentlich erhöht. Die verrohrungsfreie Ausführung hat den Vorteil, dass innerhalb der Dosiereinheit die mit Flüssigkeit benetzten Kontaktflächen reduziert sind und damit das Flüssigkeitsvolumen so gering wie möglich gehalten wird, was sich im Fall von Wasserstoffperoxidlösung wiederum positiv auf den Zersetzungsgrad und den während des Dosierprozesses auftretenden Gasanteil auswirkt.

In einer bevorzugten Ausführungsform weist der mindestens eine Flüssigkeitsdurchflussregler zwei Absolutdruckmesszellen auf und arbeitet nach dem Differenzdruckverfahren. Mit dieser Methode können sehr exakte Durchflussmesswerte mit besonders niedrigen Toleranzen ermittelt werden.

Der Pufferbehälter ist vorteilhaft zwischen einem ersten und einem zweiten Trägermodul montiert, und vorzugsweise ist jedes Trägermodul auch mit dem mindestens einen Flüssigkeitsdurchflussregler fluidisch und/ oder mechanisch verbunden. Die Trägermodule sind im Wesentlichen plattenförmig ausgebildet. Das erste Trägermodul bildet für den Pufferbehälter einen Boden und das zweite Trägermodul einen Deckel. Mit Hilfe der Trägermodule werden die einzelnen Komponenten der Dosiereinheit fluidisch und/ oder mechanisch miteinander verbunden. Dazu weisen die Trägermodule mindestens an einer Seitenfläche Befestigungsmittel zur Befestigung des mindestens einen Flüssigkeitsdurchflussreglers auf. Außerdem sind in den Trägermodulen Kanäle zur fluidischen Verbindung der Komponenten angeordnet. Das ermöglicht eine sehr kompakte und stabile Bauweise der Dosiereinheit. Der Pufferbehälter kann so baulich kompakt und einfach in die Dosiereinheit integriert werden.

In einer Ausführungsform ist im ersten Trägermodul ein Kanal angeordnet, der als Zulauf für den Pufferbehälter ausgebildet ist. Über diesen Zulauf kann der Pufferbehälter mit der Flüssigkeit befüllt werden, die Bestandteil im zu dosierenden Aerosol ist. Günstigerweise wird dem Pufferbehälter kontinuierlich Flüssigkeit zugeführt, und der Pufferbehälter wird permanent unter Druck gehalten. Dadurch ist eine ständige Versorgung des mindestens einen Flüssigkeitsdurchflussreglers mit Flüssigkeit sichergestellt, ohne dass größere Gasmengen zum Flüssigkeitsdurchflussregler gelangen könnten.

Im ersten Trägermodul ist vorteilhafterweise mindestens eine fluidische Verbindung zwischen dem Pufferbehälter und einem Eingang des mindestens einen Flüssigkeitsdurchflussreglers angeordnet. Diese konstruktive Maßnahme bedingt einen möglichst kurzen fluidischen Weg zwischen den beiden miteinander zu verbindenden Komponenten und damit eine kurze Verweilzeit der Flüssigkeit in Verbindungsleitungen der Dosiereinheit. Gerade bei Anwendungen mit Wasserstoffperoxidlösungen wird dadurch der störende Gasanteil in Folge der Zersetzung von Wasserstoffperoxid, wie oben beschrieben, möglichst niedrig gehalten. Ferner sorgt diese Maßnahme ebenfalls für einen kompakten Aufbau.

In einer weiteren Ausführungsform ist im ersten Trägermodul ein Anschluss für ein Überdruckventil zur Regelung des Drucks im Pufferbehälter angeordnet. So wird ein gewünschter Maximaldruck im Pufferbehälter nicht überschritten. Der Anschluss für das Überdruckventil kann aber auch direkt am Pufferbehälter positioniert sein.

Vorteilhafterweise wird die am Überdruckventil austretende Flüssigkeit in den Pufferbehälter zurückgeleitet. Dadurch können der Flüssigkeitsverbrauch und somit die Kosten reduziert werden.

Es ist vorgesehen, einen Ausgang des mindestens einen Flüssigkeitsdurchflussreglers mit einer Mischvorrichtung zur Vermischung der Flüssigkeit mit dem Trägergas zu verbinden. Auch die Mischvorrichtung wird vorteilhafterweise verrohrungsfrei direkt an den Ausgang des Flüssigkeitsdurchflussreglers angeschlossen.

Insbesondere sind alle flüssigkeitsführenden Verbindungen vom Eingang für Flüssigkeit (insbesondere Wasserstoffperoxid) bis zum Ausgang des Aerosols verrohrungsfrei. Alle Kanäle sitzen in aneinandergeflanschten Einheiten.

Die Mischvorrichtung weist eine Zuleitung für das Trägergas zur Bildung des Aerosols auf. So wird das Aerosol in der Mischvorrichtung direkt am Ausgang des Flüssigkeitsdurchflussreglers gebildet. Auch dadurch wird die Verweildauer der Flüssigkeit innerhalb der Dosiereinheit möglichst gering gehalten.

Die Mischvorrichtung ist in einer Ausführungsform am zweiten Trägermodul vorgesehen ebenso wie der mindestens eine Ausgang zur Abgabe des Aerosols. Auch durch diese Maßnahme sind hier sämtliche fluidischen Verbindungen verrohrungsfrei realisiert, und das Flüssigkeitsvolumen innerhalb der Dosiereinheit ist reduziert. Das hat den Vorteil, dass der Ausgang am zweiten Trägermodul auf einen gewünschten Anschluss angepasst werden kann, je nach dem wie es zur Weiterverwendung des Aerosols erforderlich ist. Der Ausgang zur Abgabe des Aerosols kann aber auch direkt an der Mischvorrichtung angeordnet sein.

Der mindestens eine Flüssigkeitsdurchflussregler ist in der Dosiereinheit in einer Ausführungsform vertikal angeordnet. Das hat den Vorteil, dass der eventuell gebildete Gasanteil sofort in Richtung zum Ausgang des Flüssigkeitsdurchflussreglers fließt und sich sonst an keiner anderen Stelle in der Dosiereinheit eine Gasblase ausbilden kann, die die Durchflussmessung verfälschen würde.

Der Pufferbehälter weist in einer Ausführungsform zur Niveaueinstellung der Wasserstoffperoxidlösung eine Überströmeinrichtung auf. So ist zu jedem

Zeitpunkt des Dosiervorgangs ein gleichbleibender Flüssigkeitspegel gewährleistet.

Die Überströmeinrichtung ist günstigerweise als Steigrohr ausgebildet. Das stellt eine kostengünstige und einfache Lösung zur Niveaueinstellung der Flüssigkeit im Pufferbehälter dar.

Ein Ablauf der Überströmeinrichtung ist mit dem ersten Trägermodul und einem dort angeordneten Ausgang fluidisch verbunden. Bildet das erste Trägermodul für den Pufferbehälter den Boden, so kann die Überströmeinrichtung mit einem Ende direkt mit dem ersten Trägermodul auf einfache Weise verbunden werden, beispielsweise indem die Überströmeinrichtung in eine dafür vorgesehene Ausnehmung, die in einen Kanal im ersten Trägermodul nach außen mündet, eingesteckt oder eingeschraubt wird.

In einer Ausführungsform wird an den Pufferbehälter ein Ventil zur definierten Druckbeaufschlagung des Pufferbehälters angeschlossen. Dieses Ventil ist vor allem während der Anlaufphase der Dosiereinheit relevant, solange der Pufferbehälter mit Flüssigkeit gefüllt wird. Durch eine anfängliche Druckbeaufschlagung mit Hilfe des Ventils wird dadurch schon frühzeitig der mindestens eine Flüssigkeitsdurchflussregler mit Flüssigkeit versorgt, und zwar auch solange der gewünschte Flüssigkeitspegel noch nicht erreicht ist, wodurch die Dosiereinheit schneller betriebsbereit ist.

In einer weiteren Ausführungsform sind mehrere Flüssigkeitsdurchflussregler nebeneinander blockartig am ersten und/ oder zweiten Trägermodul montiert, deren Eingänge alle mit dem Pufferbehälter fluidisch verbunden sind und deren Ausgänge jeweils mit einer Mischvorrichtung zur Abgabe von Aerosol verbunden sind. Das hat den Vorteil, dass mit einer einzigen Dosiereinheit, einem Pufferbehälter und einem ersten und einem zweiten Trägermodul an mehreren Ausgängen parallel Aerosol dosiert abgegeben werden kann. Dadurch wird eine sehr kompakte und kostengünstige Dosiereinheit zur Verfügung gestellt.

Weitere Vorteile und Ausgestaltungen der Erfindung werden anhand der beigefügten Figuren beschrieben. Hierbei zeigen:
**Fig. 1** eine räumliche Darstellung einer erfindungsgemäßen Dosiereinheit;
**Fig. 2** eine Explosionsdarstellung der Dosiereinheit gemäß **Fig. 1****;** und
**Fig. 3** eine Seitenansicht der Dosiereinheit mit einer Schnittdarstellung in einem Teilbereich
**Fig. 3a** eine Detailansicht des Durchflussmessers der Dosiereinheit gemäß **Fig.1****;**
**Fig. 4** eine räumliche Darstellung einer zweiten Ausführungsform einer erfindungsgemäßen Dosiereinheit;
**Fig. 5** eine Draufsicht auf die Dosiereinheit gemäß **Fig. 4****;**
**Fig. 6** eine Schnittansicht durch die Dosiereinheit gemäß **Fig. 4****.**

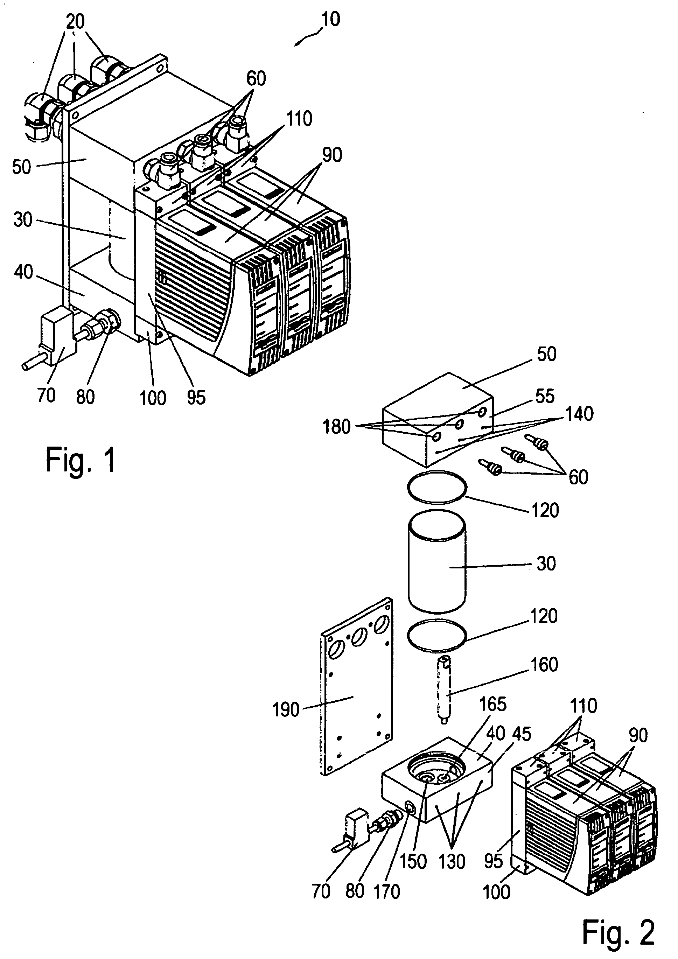

In **Fig. 1** ist eine Dosiereinheit 10 mit drei Ausgängen 20 zur Abgabe eines Aerosols dargestellt. Ein gemeinsamer Pufferbehälter 30 zur Aufnahme einer Flüssigkeit, einem Bestandteil des zu dosierenden Aerosols, ist zwischen einem ersten, unteren Trägermodul 40 und einem zweiten, oberen Trägermodul 50 angeordnet.

Die beiden Trägermodule 40, 50 sind im Wesentlichen quaderförmige, einstückige Teile und zueinander parallel ausgebildet.

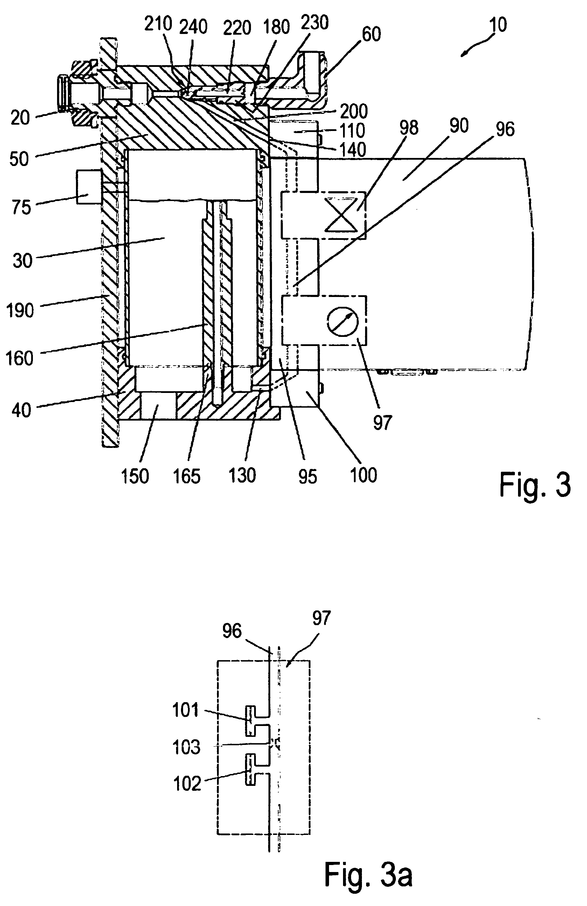

Über Anschlüsse 60 am Trägermodul 50 wird ein Trägergas zugeführt, dem die Flüssigkeit zur Bildung des Aerosols beigemischt wird (detaillierte Beschreibung bei Fig. 3).

Das erste Trägermodul 40 weist einen Anschluss 80 auf, an den ein Überdruckventil 70 zur Regelung des Drucks im Pufferbehälter 30 angeschlossen ist.

Drei jeweils als bauliche Einheiten ausgebildete Flüssigkeitsdurchflussregler 90, mit jeweils einem Fluidblock 95, sind an einem Ende 100 des Fluidblocks 95 mit dem ersten Trägermodul 40 und am anderen Ende 110 mit dem zweiten Trägermodul 50 mechanisch fest verbunden, beispielsweise verschraubt.

Die Flüssigkeitsdurchflussregler 90 sind bezüglich der Flüssigkeitsfließrichtung vertikal innerhalb der Dosiereinheit 10 angeordnet. Flüssigkeitsdurchflussregler 90 umfassen üblicherweise einen Fluidblock 95, der von einem Hauptkanal 96 durchragt wird, einen Durchflusssensor 97 und ein Proportionalventil 98 (siehe Fig. 3). Am Ende 100 des Fluidblocks 95 ist ein Fluideingang des Flüssigkeitsdurchflussreglers 90 angeordnet und am Ende 110 ein Fluidausgang, die beide in einen den Fluidblock 95 durchragenden Hauptkanal 96 münden. Selbstverständlich können auch andere Ausführungsformen der Dosiereinheit 10 aufgebaut werden, die eine andere Anzahl an Ausgängen 20 und Flüssigkeitsdurchflussreglern 90 aufweisen, und es können auch mehr Ausgänge 20 als Flüssigkeitsdurchflussregler 90 in einer Dosiereinheit 10 angeordnet sein.

**Fig. 2** zeigt eine Explosionsdarstellung der Dosiereinheit 10 mit den drei aneinandergrenzenden Flüssigkeitsdurchflussreglern 90 entsprechend **Fig. 1****.** Der Pufferbehälter 30 ist als axial beidseitig offener Rohrabschnitt zwischen dem ersten Trägermodul 40 als Boden und dem zweiten Trägermodul 50 als Deckel und zwei Dichtelementen 120 ausgebildet. Die Trägermodule 40, 50 besitzen an den Außendurchmesser des Pufferbehälters 30 angepasste Vertiefungsbohrungen, die das jeweilige Ende des Pufferbehälters 30 aufnehmen.

Die Trägermodule 40, 50 weisen an Seitenflächen 45, 55 Öffnungen 130, 140 für fluidische Verbindungen auf. In der Dosiereinheit 10 ist jede Öffnung 130 im Trägermodul 40 mit einem Fluideingang am Ende 100 der Flüssigkeitsdurchflussregler 90 strömungsmäßig verbunden und jede Öffnung 140 im Trägermodul 50 mit einem Fluidausgang am Ende 110 der Flüssigkeitsdurchflussregler 90.

Die Öffnungen 130 stellen fluidische Verbindungen zum Inneren des Pufferbehälters 30 her. Sie können als einfache Bohrungen im Trägermodul 40 gefertigt sein.

Der Pufferbehälter 30 kann aber auch als einstückige Einheit mit den Trägermodulen 40, 50 oder als Behälter mit Deckel und Boden, der an die Trägermodule 40, 50 angrenzt, ausgebildet sein und fluidische Verbindungen als separate Anschlüsse aufweisen.

Im Trägermodul 40 ist eine weitere Öffnung 150 angeordnet, die als einfache Bohrung durch das Trägermodul 40 ausgeführt ist und in den Pufferbehälter 30 führt. Diese Öffnung 150 wird als Zuleitung zur Befüllung des Pufferbehälters 30 mit der Flüssigkeit verwendet, die Bestandteil des zu dosierenden Aerosols ist.

Mittels einer im Pufferbehälter 30 angeordneten Überströmvorrichtung 160 wird der Flüssigkeitspegel im Pufferbehälter 30 auf einem gewünschten Niveau konstant gehalten. Die Überströmvorrichtung 160 ist als Steigrohr ausgebildet und an ihrem unteren Ende im Pufferbehälter 30, parallel zu dessen Mittelachse, im Boden, also in der hier beschriebenen Ausführungsform im Trägermodul 40 an einem Fluidausgang 165 befestigt, beispielsweise mittels Gewindeverbindungen eingeschraubt.

Eine fluidische Verbindung führt vom Fluidausgang 165 zu einem Ausgang 170 auf einer Seitenfläche des Trägermoduls 40. Am Ausgang 170 ist der Anschluss 80 angeordnet, der mit dem Überdruckventil 70 verbunden ist. Das Steigrohr ist nach oben offen ausgebildet und wirkt als Überlaufrohr, in das die Flüssigkeit abfließt, wenn ein gewünschter Pegel im Pufferbehälter 30 überschritten wird.

Vorteilhafterweise ist die Überströmvorrichtung 160 bezüglich ihrer Höhe im Pufferbehälter 30 verstellbar angeordnet, so dass eine gewünschte Pegelhöhe im Pufferbehälter 30 einstellbar ist. Die über die Überströmvorrichtung 160 austretende Flüssigkeit kann in den Pufferbehälter 30 zurückgeleitet werden.

Mit Hilfe des Überdruckventils 70 ist der Druck im Pufferbehälter 30 regelbar. Selbstverständlich ist für die Funktionsweise der Dosiereinheit 10 unerheblich, auf welcher Seitenfläche des Trägermoduls 40 die fluidische Verbindung vom Ausgang 170 herausgeführt wird. Der Anschluss 80 kann auch auf einer anderen Seitenfläche angeordnet sein als in Fig. 2 dargestellt.

Das Trägermodul 50 weist neben den Öffnungen 140 zu Verbindungen mit jeweils einem Fluidausgang am Ende 110 eines Flüssigkeitsdurchflussreglers 90 auch Eingänge 180 zur Ankopplung der Anschlüsse 60 zur Zuführung des Trägergases auf.

Die Trägermodule 40, 50 sind über eine Montageplatte 190 fest verbunden. Die Montageplatte 190 erhöht die mechanische Stabilität der Dosiereinheit 10 und ist nützlich zu Montagezwecken der Dosiereinheit 10 in einer Anlage.

Dadurch, dass sämtliche fluidischen Verbindungen zwischen den einzelnen Komponenten als Kanäle innerhalb der Trägermodule 40, 50 ausgebildet sind und die Flüssigkeitsdurchflussregler 90 direkt an die Trägermodule 40, 50 angeschlossen sind, kann in der Dosiereinheit 10 auf andere Arten von Fluidleitungen wie Schlauch- oder Rohrverbindungen verzichtet werden. Die fluidischen Verbindungswege sind dadurch so kurz als möglich ausgeführt. Diese verrohrungsfreie Konstruktion betrifft insbesondere alle Teile, die flüssigkeitsführend sind, vom Eingang der Flüssigkeit bis zum Ausgang 20 des Aerosols.

**Fig. 3** zeigt eine Seitenansicht der Dosiereinheit 10 mit einer Schnittdarstellung aller Komponenten mit Ausnahme des Flüssigkeitsdurchflussreglers 90. Wie in **Fig. 2** sind auch in **Fig. 3** der Pufferbehälter 30 mit der Überstromvorrichtung 160, das Trägermodul 40 mit der Öffnung 150 zur Zuleitung der Flüssigkeit in den Pufferbehälter 30 und die Montageplatte 190 dargestellt, neben zusätzlichen Details betreffend das Trägermodul 50.

Im Trägermodul 50 ist die Öffnung 140 mit einem Fluidausgang am Ende 110 der Flüssigkeitsdurchflussregler 90 verbunden. Die Öffnung 140 geht in einen Kanal 200 im Trägermodul 50 über, der zu einer Mischvorrichtung 210 führt, die ebenfalls im Trägermodul 50 angeordnet ist. Durch den Kanal 200 gelangt eine exakt definierte Flüssigkeitsmenge aus dem Flüssigkeitsdurchflussregler 90 in die Mischvorrichtung 210. Die Mischvorrichtung 210 ist im Trägermodul 50 in einer kanalförmigen Ausnehmung ausgehend vom Eingang 180 angeordnet und weist einen Kanal 220 auf, der über den Eingang 180 mit dem Anschluss 60 zur Zuführung des Trägergases in Verbindung steht.

In die Ausnehmung stromabwärts des Eingangs 180 ist ein demontierbarer Einsatz 230 eingesetzt, der den Kanal 220 aufweist. Der Kanal 200 mündet in eine düsenartig verengte Mischkammer 240 im Kanal 220 des Einsatzes 230. Die Verwendung eines Einsatzes 230 ist jedoch nicht zwingend erforderlich.

Durch die zusammenlaufenden Kanäle 200, 220 wird am Ende der Mischvorrichtung 210 das Aerosol bestehend aus der Flüssigkeit und dem Trägergas bereitgestellt. Damit auch eine definierte Menge Trägergas in die Mischvorrichtung 210 gelangt, kann an den Anschluss 60 ein Gasdurchflussregler, beispielsweise ein Massendurchflussregler, angeschlossen werden.

Das Ende der Mischvorrichtung 210 ist fluidisch mit dem Ausgang 20 der Dosiereinheit 10 verbunden. Dieser Ausgang 20 wird auf einen gewünschten Anschluss angepasst, je nachdem wie das dosierte Aerosol weiterverwendet werden soll.

Am Pufferbehälter 30 ist des Weiteren ein in Fig. 3 lediglich schematisch dargestelltes Ventil 75 angeschlossen, durch das eine definierte Druckbeaufschlagung des Pufferbehälters 30 erfolgen kann.

Im Folgenden wird noch einmal kurz die Funktionsweise der Dosiereinheit 10 zusammengefasst. Der Dosiereinheit 10 wird zur Bildung eines Aerosols über die einen Eingang der Dosiereinheit 10 bildende Öffnung 150 eine Flüssigkeit und über die Anschlüsse 60 ein Trägergas zugeführt. Die Öffnung 150 bildet einen Kanal, der als Zulauf für den Pufferbehälter 30 dient. Die Flüssigkeit füllt zunächst den Pufferbehälter 30. Die Flüssigkeit strömt aus dem Pufferbehälter 30 über das Trägermodul 40 zu den Öffnungen 130. Jede Öffnung 130 ist mit einem Fluideingang am Ende 100 des Fluidblocks 95 eines Flüssigkeitsdurchflussreglers 90 verbunden, so dass die Flüssigkeit in den Hauptströmungskanal 96 gelangt.

Mit jedem Hauptströmungskanal 96 ist jeweils ein Durchflusssensor 97 verbunden, der die Durchflussmenge der Flüssigkeit misst. Darauf abgestimmt wird der Öffnungsgrad des Proportionalventils 98 eingestellt, und es gelangt eine definierte Flüssigkeitsmenge zum Ausgang am Ende 110 des Fluidblocks 95 des Flüssigkeitsdurchflussreglers 90.

In Figur 3a ist schematisch der Aufbau eines Durchflusssensor 97 dargestellt. Der Durchflusssensor 97 arbeitet nach dem Differenzdruckverfahren. Dazu weist der Durchflusssensor 97 zwei Absolutdruckmesszellen 101, 102 sowie ein im Hauptströmungskanal 96 zwischen den Absolutdruckmesszellen 101, 102 angeordnete Blende 103 zur Druckreduzierung auf. Aus der Differenz der von den beiden Absolutdruckmesszellen 101, 102 gemessenen Drücke sowie weiteren (bekannten) Parametern, wie zum Beispiel der Flüssigkeitsdichte, kann die Durchflussmenge der durch den Hauptströmungskanal 96 strömenden Flüssigkeit bestimmt werden.

Der Fluidausgang des Flüssigkeitsdurchflussreglers 90 grenzt unmittelbar an die Öffnung 140, so dass die Flüssigkeit vom Flüssigkeitsdurchflussregler 90 zur Öffnung 140 im Trägermodul 50 und dort in den Kanal 200 strömt.

Die Flüssigkeit strömt durch den Kanal 200 weiter in die Mischkammer 240 der Mischvorrichtung 210. In die Mischkammer 240 gelangt auch das Trägergas über den Anschluss 60, den Eingang 180 im Trägermodul 50 und den Kanal 220 der Mischvorrichtung 210, wodurch das zu dosierende Aerosol in der Mischkammer 240 erzeugt wird.

In der in den Figuren 1 bis 3 gezeigten Ausführungsform strömt also das Trägergas durch die Mischvorrichtung 210 in Längsrichtung vollständig durch den Kanal 220. Das Aerosol gelangt vom Ausgang der Mischkammer 240 zum Ausgang 20 der Dosiereinheit 10.

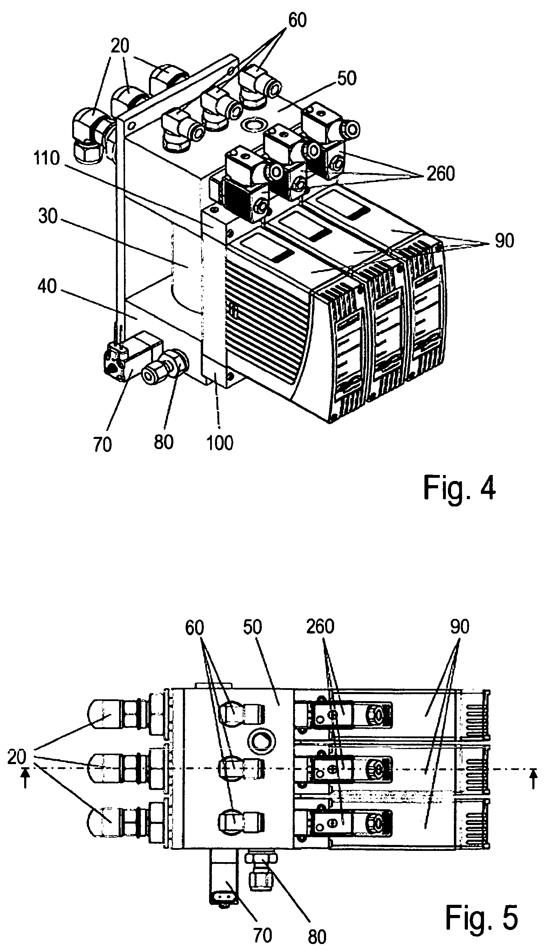

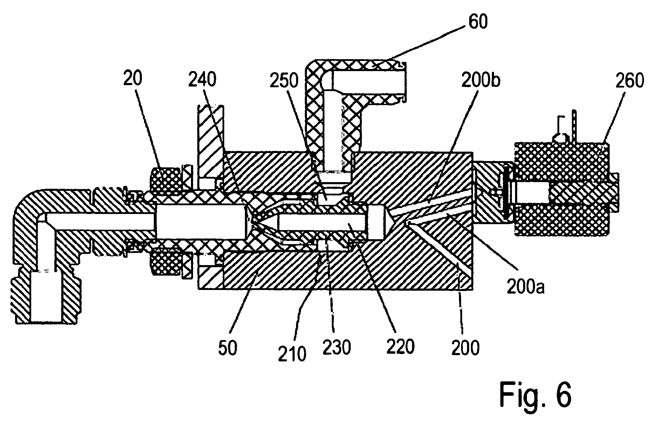

Die in den Figuren 4 bis 6 gezeigte Ausführungsform unterscheidet sich von der in den Figuren 1 bis 3 gezeigten Ausführungsform dadurch, dass der Kanal 200, in dem die Flüssigkeit in die Mischvorrichtung 210 strömt, in den Kanal 220 mündet. An der Mischvorrichtung 210 ist ein Ringkanal 250 vorgesehen, in den das Trägergas über den Eingang 180 für das Trägergas zur Mischkammer 240 geführt wird.

Auch die in den Figuren 1 bis 3 gezeigte Mischvorrichtung 210 kann einen solchen Ringkanal aufweisen.

Der Kanal 200 weist zudem zwei Abschnitte 200a, 200b auf, zwischen denen ein zusätzliches Ventil 260 angeordnet ist, das als Absperrventil dient.

Der Anschluss 60 beziehungsweise der Eingang 180 für das Trägergas sind hier auf der Oberseite des Trägermoduls 50 angeordnet.

Das Absperrventil stellt beispielsweise sicher, dass die Zuführung der Flüssigkeit in die Mischvorrichtung 210 im Bedarfsfall zuverlässig gestoppt werden kann.

Das zusätzliche Ventil 260 kann somit als Sicherheitseinrichtung angesehen werden.

Das Überdruckventil 70 ist in den Figuren 4 und 5 über interne Kanäle im Trägermodul 40 mit der Überströmvorrichtung 160 sowie dem Anschluss 80 verbunden. Über den Anschluss 80 wird die über die Überströmvorrichtung 160 austretende Flüssigkeit aus der Dosiereinheit 10 abgeleitet.

## Patentansprüche

1. Dosiereinheit (10) mit mindestens einem Ausgang (20) zur Abgabe eines Aerosols mit definierter Konzentration, mit mindestens einem Eingang (180) für ein Trägergas, mindestens einem Eingang für eine Flüssigkeit, vorzugsweise für eine Wasserstoffperoxidlösung, und einem Pufferbehälter (30) für die Flüssigkeit, **dadurch gekennzeichnet, dass** die Dosiereinheit (10) ausströmseitig mindestens einen Flüssigkeitsdurchflussregler (90) aufweist, und wobei in der Dosiereinheit (10) alle flüssigkeitsführenden Verbindungen vom Eingang für Flüssigkeit bis zum Ausgang (20) zur Ausgabe des Aerosols verrohrungsfrei ausgeführt sind.

2. Dosiereinheit nach Anspruch 1, **dadurch gekennzeichnet, dass** der mindestens eine Flüssigkeitsdurchflussregler (90) zwei Absolutdruckmesszellen (101, 102) aufweist und nach dem Differenzdruckverfahren arbeitet.

3. Dosiereinheit nach Anspruch 1 oder 2, **dadurch gekennzeichnet, dass** der Pufferbehälter (30) zwischen einem ersten und einem zweiten Trägermodul (40, 50) montiert ist, und vorzugsweise jedes Trägermodul (40, 50) auch mit dem mindestens einen Flüssigkeitsdurchflussregler (90) fluidisch und/ oder mechanisch verbunden ist.

4. Dosiereinheit nach Anspruch 3, **dadurch gekennzeichnet, dass** im ersten Trägermodul (40) ein Kanal angeordnet ist, der als Zulauf für den Pufferbehälter (30) ausgebildet ist.

5. Dosiereinheit nach Anspruch 3 oder 4, **dadurch gekennzeichnet, dass** im ersten Trägermodul (40) mindestens eine fluidische Verbindung zwischen dem Pufferbehälter (30) und einem Eingang des mindestens einen Flüssigkeitsdurchflussreglers (90) und/oder ein Anschluss (80) für ein Überdruckventil (70) zur Steuerung des Drucks im Pufferbehälter (30) angeordnet ist.

6. Dosiereinheit nach Anspruch 5, **dadurch gekennzeichnet, dass** die am Überdruckventil (70) austretende Flüssigkeit in den Pufferbehälter (30) zurückgeleitet wird.

7. Dosiereinheit nach einem der vorhergehenden Ansprüche, **dadurch gekennzeichnet, dass** ein Ausgang des mindestens einen Flüssigkeitsdurchflussreglers (90) mit einer Mischvorrichtung (210) zur Vermischung der Flüssigkeit mit dem Trägergas verbunden ist, insbesondere wobei die Mischvorrichtung (210) eine Zuleitung (220) für das Trägergas zur Bildung des Aerosols aufweist.

8. Dosiereinheit nach Anspruch 7 soweit auf Anspruch 3 rückbezogen, **dadurch gekennzeichnet, dass** die Mischvorrichtung (210) am oder im zweiten Trägermodul (50) vorgesehen ist und im zweiten Trägermodul (50) der mindestens eine Ausgang (20) zur Abgabe des Aerosols angeordnet ist.

9. Dosiereinheit nach einem der vorhergehenden Ansprüche, **dadurch gekennzeichnet, dass** der mindestens eine Flüssigkeitsdurchflussregler (90) in der Dosiereinheit (10) vertikal angeordnet ist.

10. Dosiereinheit nach einem der vorhergehenden Ansprüche, **dadurch gekennzeichnet, dass** der Pufferbehälter (30) zur Niveaueinstellung der Wasserstoffperoxidlösung eine Überströmeinrichtung aufweist.

11. Dosiereinheit nach Anspruch 10, **dadurch gekennzeichnet, dass** die Überströmeinrichtung (160) als Steigrohr ausgebildet ist.

12. Dosiereinheit nach Anspruch 10 oder 11 soweit auf Anspruch 3 rückbezogen, **dadurch gekennzeichnet, dass** ein Ablauf der Überströmeinrichtung (160) mit dem ersten Trägermodul (40) und einem dort angeordneten Ausgang (165) fluidisch verbunden ist.

13. Dosiereinheit nach einem der vorhergehenden Ansprüche, **dadurch gekennzeichnet, dass** an den Pufferbehälter (30) ein Ventil (75) zur definierten Druckbeaufschlagung des Pufferbehälters (30) angeschlossen ist.

14. Dosiereinheit nach einem der vorhergehenden Ansprüche soweit auf Anspruch 3 rückbezogen, **dadurch gekennzeichnet, dass** mehrere Flüssigkeitsdurchflussregler (90) nebeneinander blockartig am ersten und/ oder zweiten Trägermodul (40, 50) montiert sind, deren Eingänge alle mit dem Pufferbehälter (30) fluidisch verbunden sind und deren Ausgänge jeweils mit einer Mischvorrichtung (210) zur Abgabe von Aerosol verbunden sind.

## Claims

1. A metering unit (10) having at least one outlet (20) for dispensing an aerosol with a defined concentration, having at least one inlet (180) for a carrier gas, at least one inlet for a liquid, preferably for a hydrogen peroxide solution, and a buffer container (30) for the liquid, **characterised in that** the metering unit (10) includes at least one liquid flow controller (90) on the outflow side and, in the metering unit (10), all the liquid-carrying connections from the inlet for liquid to the outlet (20) for dispensing the aerosol being implemented in a piping-free manner.

2. The metering unit according to claim 1, **characterised in that** the at least one liquid flow controller (90) includes two absolute pressure measuring cells (101, 102) and operates according to the differential pressure method.

3. The metering unit according to claim 1 or 2, **characterised in that** the buffer container (30) is mounted between a first and a second carrier module (40, 50) and, preferably, each carrier module (40, 50) is also fluidically and/or mechanically connected to the at least one liquid flow controller (90).

4. The metering unit according to claim 3, **characterised in that** the first carrier module (40) has a channel arranged therein which is formed as an inflow for the buffer container (30).

5. The metering unit according to claim 3 or 4, **characterised in that** in the first carrier module (40), at least one fluid connection is arranged between the buffer container (30) and an inlet of the at least one liquid flow controller (90) and/or a port (80) for a pressure relief valve (70) is arranged for controlling the pressure in the buffer container (30).

6. The metering unit according to claim 5, **characterised in that** the liquid exiting at the pressure relief valve (70) is returned into the buffer container (30).

7. The metering unit according to any one of the preceding claims, **characterised in that** an outlet of the at least one liquid flow controller (90) is connected to a mixing device (210) for mixing the liquid with the carrier gas, the mixing device (210) more particularly having a feed line (220) for the carrier gas for forming the aerosol.

8. The metering unit according to claim 7 as far as referring back to claim 3, **characterised in that** the mixing device (210) is provided at or in the second carrier module (50) and that the at least one outlet (20) for dispensing the aerosol is arranged in the second carrier module (50).

9. The metering unit according to any one of the preceding claims, **characterised in that** the at least one liquid flow controller (90) is vertically arranged in the metering unit (10).

10. The metering unit according to any one of the preceding claims, **characterised in that** the buffer container (30) includes an overflow means for adjusting the level of the hydrogen peroxide solution.

11. The metering unit according to claim 10, **characterised in that** the overflow means (160) is formed as a riser pipe.

12. The metering unit according to claim 10 or 11 as far as referring back to claim 3, **characterised in that** a drain of the overflow means (160) is fluidically connected to the first carrier module (40) and an outlet (165) arranged there.

13. The metering unit according to any one of the preceding claims, **characterised in that** a valve (75) for applying a defined pressure to the buffer container (30) is connected to the buffer container (30).

14. The metering unit according to any one of the preceding claims as far as referring back to claim 3, **characterised in that** a plurality of liquid flow controllers (90) are mounted next to each other in a block-like manner on the first and/or second carrier module (40, 50), the inlets of which are all fluidically connected to the buffer container (30) and the outlets of which are respectively connected to a mixing device (210) for dispensing aerosol.

## Revendications

1. Unité de dosage (10), présentant au moins une sortie (20) pour la distribution d'un aérosol avec une concentration définie, présentant au moins une entrée (180) pour un gaz porteur, au moins une entrée pour un liquide, de préférence pour une solution de peroxyde d'hydrogène, et un réservoir tampon (30) pour le liquide, **caractérisée en ce que** l'unité de dosage (10) présente du côté écoulement au moins un régulateur de débit de liquide (90), et dans l'unité de dosage (10), toutes les liaisons de l'entrée pour liquide jusqu'à la sortie (20) pour la distribution de l'aérosol, lesquelles transportent du liquide, étant réalisées sans tuyauterie.

2. Unité de dosage selon la revendication 1, **caractérisée en ce que** ledit au moins un régulateur de débit de liquide (90) présente deux cellules de mesure de pression absolue (101, 102) et fonctionne selon la méthode de pression différentielle.

3. Unité de dosage selon la revendication 1 ou 2, **caractérisée en ce que** le réservoir tampon (30) est monté entre un premier et un deuxième module support (40, 50), et **en ce que** chaque module support (40, 50) est de préférence également relié de manière fluidique et/ou mécanique audit au moins un régulateur de débit de liquide (90).

4. Unité de dosage selon la revendication 3, **caractérisée en ce qu'**un canal réalisé sous forme d'amenée pour le réservoir tampon (30) est agencé dans le premier module support (40).

5. Unité de dosage selon la revendication 3 ou 4, **caractérisée en ce qu'**au moins une liaison fluidique entre le réservoir tampon (30) et une entrée dudit au moins régulateur de débit de liquide (90) et/ou un raccordement (80) pour une soupape de surpression (70) pour la commande de la pression dans le réservoir tampon (30) est agencé(e) dans le premier module support (40).

6. Unité de dosage selon la revendication 5, **caractérisée en ce que** le liquide s'échappant au niveau de la soupape de surpression (70) est redirigé dans le réservoir tampon (30).

7. Unité de dosage selon l'une des revendications précédentes, **caractérisée en ce qu'**une sortie dudit au moins un régulateur de débit de liquide (90) est reliée à un dispositif mélangeur (210) pour le mélange du liquide avec le gaz porteur, le dispositif mélangeur (210) présentant en particulier une amenée (220) pour le gaz porteur pour la production de l'aérosol.

8. Unité de dosage selon la revendication 7, dans le mesure où elle dépend de la revendication 3, **caractérisée en ce que** le dispositif mélangeur (210) est prévu sur ou dans le deuxième module support (50) et **en ce que** ladite au moins une sortie (20) pour la distribution de l'aérosol est agencée dans le deuxième module support (50).

9. Unité de dosage selon l'une des revendications précédentes, **caractérisée en ce que** ledit au moins un régulateur de débit de liquide (90) est agencé verticalement dans l'unité de dosage (10).

10. Unité de dosage selon l'une des revendications précédentes, **caractérisée en ce que** le réservoir tampon (30) présente un moyen de trop-plein pour l'ajustage du niveau de la solution de peroxyde d'hydrogène.

11. Unité de dosage selon la revendication 10, **caractérisée en ce que** le moyen de trop-plein (160) est réalisé sous forme de conduite montante.

12. Unité de dosage selon la revendication 10 ou 11, dans la mesure où elles dépendent de la revendication 3, **caractérisée en ce qu'**une décharge du moyen de trop-plein (160) est reliée de manière fluidique au premier module support (40) et à une sortie (165) agencée ici.

13. Unité de dosage selon l'une des revendications précédentes, **caractérisée en ce qu'**une soupape (75) pour la pressurisation définie du réservoir tampon (30) est raccordée au réservoir tampon (30).

14. Unité de dosage selon l'une des revendications précédentes, dans la mesure où elle dépend de la revendication 3, **caractérisée en ce que** plusieurs régulateurs de débit de liquide (90) sont montés en bloc les uns à côté des autres sur le premier et/ou le deuxième module support (40, 50), dont les entrées sont toutes reliées de manière fluidique au réservoir tampon (30) et dont les sorties sont chacune reliées à un dispositif mélangeur (210) pour la distribution d'aérosol.
